(19) Europäisches Patentamt
European Patent Office
Office européen des brevets

(11) **EP 2 881 234 B1**

(12) **EUROPÄISCHE PATENTSCHRIFT**

(45) Veröffentlichungstag und Bekanntmachung des Hinweises auf die Patenterteilung:
**27.07.2016   Patentblatt 2016/30**

(51) Int Cl.:
**B29C 51/08** (2006.01)     **B29C 51/26** (2006.01)
**B29C 51/00** (2006.01)     **B29C 70/54** (2006.01)
**B29C 70/46** (2006.01)     B29K 105/08 (2006.01)

(21) Anmeldenummer: **14004043.7**

(22) Anmeldetag: **01.12.2014**

(54) **VERFAHREN ZUR HERSTELLUNG EINES FASERVERBUNDBAUTEILS, SOWIE HIERFÜR VERWENDBARE HALBZEUGANORDNUNG**

METHOD FOR MANUFACTURING A FIBROUS COMPOSITE AND SEMIFINISHED ASSEMBLY USABLE FOR SAME

PROCÉDÉ DE FABRICATION D'UN COMPOSANT EN COMPOSITE DE FIBRE, ET SYSTÈME DE SEMI-PRODUIT UTILISABLE DANS LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2013   DE 102013018148**

(43) Veröffentlichungstag der Anmeldung:
**10.06.2015   Patentblatt 2015/24**

(73) Patentinhaber: **Premium AEROTEC GmbH 86179 Augsburg (DE)**

(72) Erfinder:
• **Edelmann, Klaus**
  **28199 Bremen (DE)**
• **Frese, Tanja**
  **27367 Horstedt (DE)**
• **Hasemann, Philip**
  **26969 Butjadingen (DE)**
• **Krone, Jürgen**
  **26931 Elsfleth (DE)**
• **Krumpen, Helmut**
  **26197 Großenkneten (DE)**
• **Leis, Andreas**
  **27755 Delmenhorst (DE)**
• **Miaris, Angelos**
  **28211 Bremen (DE)**
• **Neitzel, Tim**
  **28355 Bremen (DE)**
• **Quiring, Arnoldt**
  **21684 Stade (DE)**

(74) Vertreter: **Krebs, Jörg et al Airbus Defence and Space GmbH Patentabteilung 81663 München (DE)**

(56) Entgegenhaltungen:
WO-A1-2009/130120

**Beschreibung**

Die vorliegende Erfindung betrifft eine Halbzeuganordnung nach dem Oberbegriff des Anspruchs 1 sowie ein Verfahren zur Herstellung eines Faserverbundbauteils unter Verwendung einer solchen Halbzeuganordnung nach dem Oberbegriff des Anspruchs 9.

Für die Herstellung eines Faserverbundbauteils durch Umformen (z. B. Stempelumformen) eines flächigen Faserverbundhalbzeuges in einem Formwerkzeug (z. B. Umformpresse), sind aus dem Stand der Technik "Halbzeuganordnungen" bekannt, welche jeweils das Faserverbundhalbzeug und mehrere daran befestigte und sich jeweils über den Rand des Faserverbundhalbzeuges hinaus erstreckende Halteelemente umfassen.

Bei den bekannten Verfahren zur Herstellung eines Faserverbundbauteils unter Verwendung einer derartigen Halbzeuganordnung wird diese Halbzeuganordnung mit ringsherum aus dem Formwerkzeug herausragendem Faserverbundhalbzeugrand umgeformt. Die hierbei zum Halten des Faserverbundhalbzeuges während des Umformprozesses (und gegebenenfalls während einer vorausgehenden Erwärmung des Faserverbundhalbzeuges) dienenden Halteelemente dürfen nicht im Bereich des Formwerkzeuges (Pressenbereich) liegen, da sie sonst das Werkzeug beschädigen würden. Dokument WO 2009/130120 offenbart solches Verfahren.

Nachteilig ist bei diesem Stand der Technik der oftmals erhebliche Materialmehraufwand für das umzuformende Faserverbundhalbzeug, um den vorerwähnten "überstehenden Rand des Faserverbundhalbzeuges" vorzusehen.

Es ist eine Aufgabe der vorliegenden Erfindung, eine Halbzeuganordnung der eingangs genannten Art bzw. ein Verfahren zur Herstellung eines Faserverbundbauteils unter Verwendung einer derartigen Halbzeuganordnung dahingehend zu verbessern, dass die Faserverbundbauteilherstellung mit weniger Materialaufwand realisierbar ist.

Gemäß eines ersten Aspekts der Erfindung wird diese Aufgabe bei einer Halbzeuganordnung der eingangs genannten Art dadurch gelöst, dass die Halteelemente zur Vermeidung eines höhenmäßigen Überstandes in Aussparungen des Faserverbundhalbzeuges versenkt angeordnet sind.

Durch diese Maßnahme wird vorteilhaft ermöglicht, dass während des Umformens der Rand des Faserverbundhalbzeuges wenigstens teilweise, insbesondere vollständig innerhalb des Formwerkzeuges verläuft, wobei jedoch durch die versenkte Anordnung der Halteelemente die Gefahr einer Beschädigung bzw. eines Verschleißes des Formwerkzeuges durch die Halteelemente reduziert oder ganz beseitigt wird.

Gemäß einer Ausführungsform besitzen die Aussparungen jeweils eine Kontur, die an die Kontur des betreffenden Halteelementes angepasst ist. Damit ist insbesondere der Fall umfasst, in welchem in Draufsicht betrachtet allenfalls ein kleiner Spalt zwischen der Kontur des betreffenden Halteelementes und der Kontur der betreffenden Aussparung verbleibt. Mit anderen Worten ist die Halteelementkontur in diesem Fall ohne oder mit allenfalls "geringem Spiel" in der Aussparungskontur angeordnet.

In einer denkbaren Ausführungsvariante ist die Aussparung vom seitlichen Rand des Faserverbundhalbzeuges her mit einer bestimmten Aussparungshöhe (orthogonal zur Ebene des Faserverbundhalbzeuges) eingearbeitet, die kleiner als die Höhe (Dicke) des Faserverbundhalbzeuges und größer oder gleich der Höhe (Dicke) des Halteelementes ist. Nach Einlegen/Einschieben des betreffenden Halteelementes (von der Seite her) in eine solche seitliche Aussparung sind die beiderseitigen Oberflächen des versenkt angeordneten Halteelementes jeweils durch Material des Faserverbundhalbzeuges überdeckt, und das Halteelement ist gewissermaßen "vollständig versenkt" angeordnet.

In einer anderen, bevorzugten Ausführungsvariante ist die Aussparung an einer der beiden Flachseiten des Faserverbundhalbzeuges mit einer bestimmten Aussparungstiefe eingearbeitet, die z. B. kleiner als die Höhe (Dicke) des Faserverbundhalbzeuges ist. Nach Einlegen des betreffenden Halteelementes (von der Flachseite her) in eine solche Aussparung ergibt sich eine "freiliegende Oberfläche" des (vollständig oder teilweise) versenkt angeordneten Halteelementes.

In einer Ausführungsform sind die freiliegenden Oberflächen der versenkt angeordneten Halteelemente jeweils versenkt oder allenfalls im Wesentlichen bündig zur Oberfläche des Faserverbundhalbzeuges im an die Aussparung angrenzenden Bereich angeordnet.

Durch diese Maßnahme wird ein nennenswerter höhenmäßiger Überstand der Halteelemente vermieden, was einen etwaigen Werkzeugverschleiß verhindert bzw. entsprechend verringert.

Für den Fall, dass beim Umformprozess auch eine höhenmäßige Stauchung des Faserverbundhalbzeuges erfolgt, ist es bevorzugt, wenn die freiliegenden Oberflächen der versenkt angeordneten Halteelemente jeweils versenkt bezüglich der Oberfläche des Faserverbundhalbzeuges im an die Aussparung angrenzenden Bereich sind. Diese "versenkte Anordnung der freiliegenden Oberflächen" kann hierbei vom Ausmaß her derart an den durchzuführenden Umformprozess angepasst sein, dass während des Umformprozesses keine nennenswerte (und somit Verschleiß verursachende) Kraft von den versenkt angeordneten Halteelementen auf das Formwerkzeug ausgeübt wird.

In einer Ausführungsführungsform sind die Halteelemente (oder zumindest ein Teil davon) jeweils als langgestreckte Haltestäbe oder Haltedrähte mit beispielsweise kreisrundem Querschnitt oder z. B. wenigstens annähernd quadratischem Querschnitt ausgebildet. Eine entsprechende Querausdehnung bzw. Durchmesser kann hierbei z. B. im Bereich von etwa 0,2 bis 4 mm liegen. Ein solcher Haltedraht kann an seinem proximalen (d. h. zur Fixierung am Faserverbundhalbzeug vorgesehenen) Ende abgewinkelt sein, um in eine entsprechende Fixierungsaussparung des Faserverbundhalbzeuges einzugreifen. Alternativ kann dieses Ende z. B. zu einer flachen Öse gebogen sein, um eine Befestigung durch eine Vernietung realisieren zu können.

In einer anderen Ausführungsform sind die Halteelemente (oder zumindest ein Teil davon) jeweils als langgestreckte und koplanar zur Ebene des Faserverbundhalbzeuges angeordnete Haltestreifen ausgebildet.

Damit wird vorteilhaft eine hohe mechanische Belastbarkeit (hier z. B. Zugbelastbarkeit) bei gleichzeitig vergleichsweise kleiner Höhe (Dicke) der Halteelemente erzielt.

Das Verhältnis der Breite der Haltestreifen zur Höhe (Dicke) der Haltestreifen ist bevorzugt größer als 3, insbesondere 5, andererseits beispielsweise kleiner als 100, insbesondere 50.

In einer Ausführungsform sind die Halteelemente aus einem Metallmaterial (z. B. Aluminium, Stahl, etc.) gebildet. Alternativ können hierfür auch andere Materialien vorgesehen sein, insbesondere Kunststoff- oder Kunststoffverbundmaterialien (z. B. hochschmelzender Kunststoff oder Duroplast-GFK).

In einer bevorzugten Ausführungsform sind die Halteelemente (oder zumindest deren beim späteren Umformprozess innerhalb des Formwerkzeuges befindliche Abschnitte) aus einem Material gebildet, welches weicher als das Material des für den Umformprozess verwendeten Formwerkzeuges ist (zur Vermeidung übermäßigen Werkzeugverschleisses).

In einer Ausführungsform besitzen die Halteelemente jeweils eine zur Realisierung einer Zugfederwirkung geeignete Formgestaltung. Eine solche Formgestaltung können die Halteelemente insbesondere in einem distalen (d.h. entfernt von deren Fixierungsstelle am Faserverbundhalbzeug befindlichen) Abschnitt des Elements aufweisen, der beim späteren Umformprozess außerhalb des Formwerkzeuges liegt.

Bei der vorerwähnten Ausbildung der Halteelemente als jeweils langgestreckte Haltestreifen kann hierfür z. B. ein von der Seite betrachtet wellenartiger oder zickzackartiger Verlauf der Haltestreifen in einem distalen Bereich vorgesehen sein.

Für die Fixierung der Halteelemente am Faserverbundhalbzeug kommen verschiedene Möglichkeiten in Betracht.

Da mittels der Halteelemente in der Praxis zumeist lediglich eine das Faserverbundhalbzeug "aufspannende" Zugwirkung erforderlich ist, kann die Fixierung z. B. als eine hierfür geeignete (d.h. zugfeste) Formschlussverbindung ausgebildet sein. Ein Beispiel hierfür wäre ein Halteelement, welches an seinem proximalen Ende mit einem in Höhenrichtung des Faserverbundhalbzeuges verlaufenden Abschnitt (z. B. angeformte Nase, Abwinkelung oder "Haken") in eine entsprechende Fixierungsaussparung des Faserverbundhalbzeuges eingreift.

In einer anderen Ausführungsform ist die Fixierung als eine Befestigung vorgesehen, beispielsweise durch eine Verklebung von jeweils proximalen Abschnitten der Halteelemente mit dem Faserverbundhalbzeug. Hierfür können Klebstoffschichten, falls die Halteelemente in Aussparungen versenkt angeordnet sind, z. B. zwischen den jeweiligen Aussparungsgründen und den Halteelementen angeordnet sein, oder falls keine solche Aussparungen des Faserverbundhalbzeuges vorgesehen sind, z. B. zwischen jeweiligen Bereichen auf einer Flachseite des Faserverbundhalbzeuges und den Halteelementen vorgesehen sein.

In einer anderen Ausführungsform ist die Befestigung der Halteelemente jeweils durch eine Vernietung an dem Faserverbundhalbzeug realisiert. Hierfür können Nieten, z. B. Senknieten verwendet werden, insbesondere z. B. aus einem relativ weichen Metallmaterial (z. B. Aluminium bzw. Aluminiumlegierung, bevorzugt jedenfalls weicher als das Material des Formwerkzeuges). Die Nieten oder Senknieten können hierbei durch (bevorzugt mit Senkung versehene) Befestigungslöcher der Halteelemente und weiter durch (koaxial angeordnete) Befestigungslöcher des Faserverbundhalbzeuges hindurch verlaufen. Alternativ oder zusätzlich zu einer Senkung der Befestigungslöcher der Halteelemente können auch die Befestigungslöcher des Faserverbundhalbzeuges mit einer Senkung ausgebildet sein.

Gemäß eines weiteren Aspekts der vorliegenden Erfindung wird die eingangs gestellte Aufgabe durch ein Verfahren zur Herstellung eines Faserverbundbauteils durch Umformen eines flächigen Faserverbundhalbzeuges in einem Formwerkzeug gelöst, bei welchem Verfahren eine Halbzeuganordnung der gattungsgemäßen oder erfindungsgemäßen Art verwendet wird, wobei während des Umformens der Rand des Faserverbundhalbzeuges wenigstens teilweise, insbesondere vollständig innerhalb des Formwerkzeuges verläuft und die Halteelemente sich jeweils aus dem Formwerkzeug heraus erstrecken.

Falls bei diesem Verfahren eine Halbzeuganordnung der erfindungsgemäßen Art verwendet wird, so ist wie bereits erläutert durch die versenkte Anordnung der Halteelemente die Gefahr einer Beschädigung bzw. eines Verschleißes des Formwerkzeuges reduziert oder ganz beseitigt.

Für den Fall jedoch, dass bei dem Verfahren eine solche versenkte Anordnung der Haltelemente nicht vorgesehen ist, hat sich herausgestellt, dass das Verfahren dennoch oftmals mit allenfalls geringem-Verschleiß durchführbar ist, nämlich insbesondere z. B. dann, wenn die Halteelemente jeweils als langgestreckte und koplanar zur Ebene des Faserverbundhalbzeuges angeordnete Haltestreifen ausgebildet sind, insbesondere mit einem Verhältnis der Breite der Haltestreifen von mehr als 3, insbesondere mehr als 5. Andererseits kann dieses Verhältnis z. B. kleiner als 100, insbesondere kleiner als 50 sein.

Dass es bei einem solchen Verfahren zu keinem beträchtlichen Verschleiß des Formwerkzeuges kommt, liegt in der Praxis wohl daran, dass derartige "flache" Halteelemente beim Umformprozess gewissermaßen in das Material des Faserverbundhalbzeuges hineingedrückt (versenkt) werden. In dieser Hinsicht ist eine Ausführungsform bevorzugt, bei welcher die Höhe (Dicke) der Halteelemente kleiner als das 0,3-fache, insbesondere kleiner als das 0,2-fache der Höhe (Dicke) des Faserverbundhalbzeuges im an die Fixierungsstelle angrenzenden Bereich ist. Zur Fixierung kann beispielsweise wieder eine Formschlussverbindung der oben bereits beschriebenen Art, oder auch z. B. eine Vernietung mit dem Faserverbundhalbzeug vorgesehen sein.

Gemäß einer bevorzugten Verwendung einer Halbzeuganordnung der hier beschriebenen Art und/oder eines Verfahrens der hier beschriebenen Art ist die Herstellung von Strukturbauteilen für Fahrzeuge, insbesondere Luftfahrzeuge, vorgesehen.

Gemäß einer spezielleren Verwendung einer Halbzeuganordnung der hier beschriebenen Art und/oder eines Verfahrens der hier beschriebenen Art ist die Herstellung von so genannten "Clips" für die Herstellung eines Fahrzeugrumpfes, insbesondere z. B. Rumpf oder Rumpfsektion eines Luftfahrzeuges, aus Rumpfschale, Stringern, Spanten und Clips vorgesehen.

Als Stringer sind in diesem Zusammenhang an der Innenseite der Rumpfschale längsverlaufende Verstärkungselemente (z. B. Profile) zu verstehen, wohingegen die Spante an der Innenseite der Rumpfschale in Umfangsrichtung verlaufende Verstärkungselemente (z. B. Profile) darstellen. Die Clips sind hierbei im fachüblichen Sinne Verbindungselemente zur Schaffung einer Verbindung zwischen einem Spant und der Rumpfschale.

Darüber hinaus wäre es bei der Herstellung eines Fahrzeugrumpfes aus Rumpfschale, Stringern und Spanten auch denkbar, gemäß der Erfindung andere Verbindungselemente zur Verbindung dieser Komponenten untereinander herzustellen, beispielsweise zur Schaffung einer Verbindung zwischen einem Spant und wenigstens einem Stringer, oder zur Schaffung einer Verbindung zwischen einem Spant und wenigstens einem Stringer und der Rumpfschale. Ein derartiges Verbindungselement bzw. der genannte Clip kann hierbei an den entsprechenden Stellen mit den betreffenden Komponenten z. B. durch eine Verklebung oder eine Vernietung verbunden sein.

Die Erfindung wird nachfolgend anhand von Ausführungsbeispielen mit Bezug auf die beigefügten Zeichnungen weiter beschrieben. Es stellen dar:

Fig. 1     eine perspektivische Ansicht einer Halbzeuganordnung gemäß eines Ausführungsbeispiels, zusammen mit einer unteren Werkzeughälfte eines zur Umformung verwendeten Formwerkzeuges,

Fig. 2     eine perspektivische Ansicht der umgeformten Halbzeuganordnung von Fig. 1 (nach Entnahme aus dem Formwerkzeug),

Fig. 3     eine Draufsicht eines in Fig. 1 mit III gekennzeichneten Details der Halbzeuganordnung in einem ersten Stadium der Herstellung der Halbzeuganordnung,

Fig. 4     eine der Fig. 3 entsprechende Ansicht in einem zweiten Stadium der Herstellung der Halbzeuganordnung,

Fig. 5     eine der Fig. 3 entsprechende Ansicht in einem dritten Stadium der Herstellung der Halbzeuganordnung,

Fig. 6     eine Seitenansicht eines Haltestreifens in einem bei dem Umformprozess außerhalb des betreffenden Formwerkzeuges liegenden Bereich, und

Fig. 7     eine beispielhafte Vergleichsdarstellung zum Vergleich des Materialaufwandes zur Herstellung eines bestimmten Faserverbundbauteils, einerseits gemäß des Stands der Technik und andererseits gemäß der Erfindung.

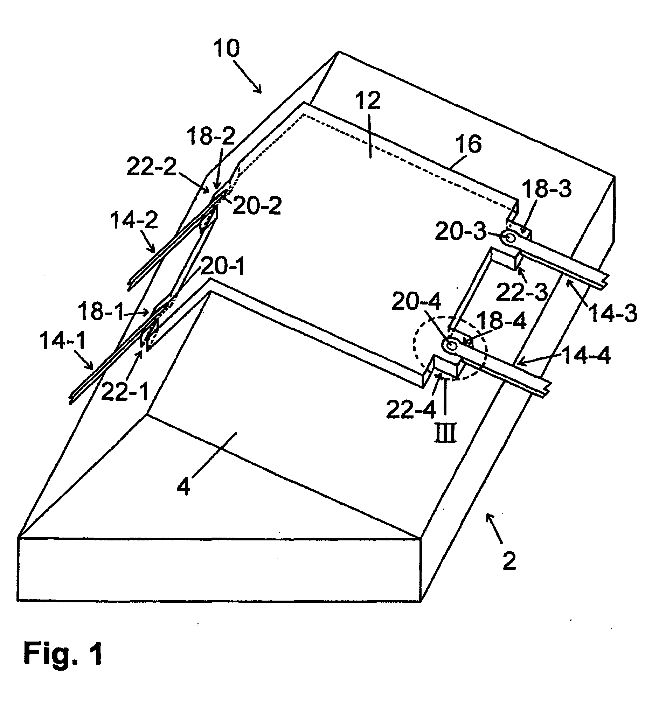

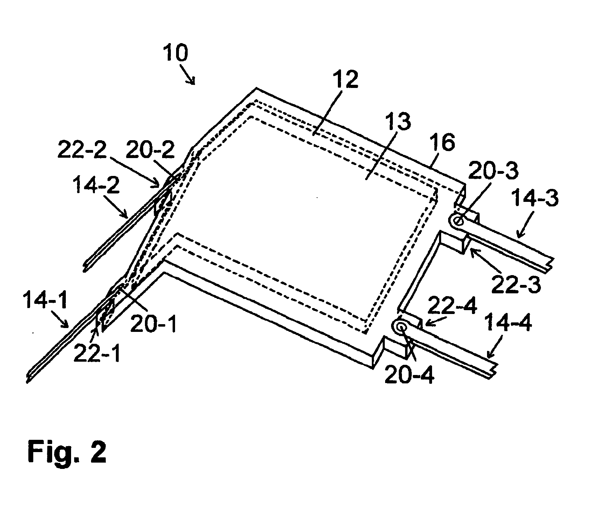

Fig. 1 und 2 zeigen eine Halbzeuganordnung 10, wobei in Fig. 1 zur Veranschaulichung eines unter Verwendung der Halbzeuganordnung 10 durchgeführten Umformprozesses ferner eine untere Werkzeughälfte 2 (Unterwerkzeug) mit einer unteren Formfläche 4 eingezeichnet ist.

Für diesen Umformprozess ist auch eine entsprechende obere Werkzeughälfte (Oberwerkzeug) des Formwerkzeuges vorgesehen, welches in Fig. 1 jedoch der Einfachheit der Darstellung halber nicht eingezeichnet ist.

Die Halbzeuganordnung 10 umfasst ein flächiges, mittels des Werkzeuges umzuformendes Faserverbundhalbzeug 12, und ferner mehrere (im dargestellten Beispiel: vier) am Faserverbundhalbzeug 12 fixierte (hier: befestigte) und sich jeweils über den Rand des Faserverbundhalbzeuges 12 hinaus erstreckende Haltestreifen 14-1 bis 14-4.

Diese Haltestreifen 14-1 bis 14-4, nachfolgend auch als "Haltestreifen 14" bezeichnet, sind im dargestellten Beispiel aus einem Metallmaterial wie z. B. einer Aluminiumlegierung gebildet und dienen dazu, während des mit Fig. 1 veranschaulichten Umformprozesses das Faserverbundhalbzeug 12 in einer gewünschten Lage zu halten, um damit insbesondere ein Verrutschen oder eine unerwünschte Faltenbildung zu vermeiden, bevor der Umformprozess abgeschlossen ist.

Im dargestellten Beispiel, und das ist im Rahmen der Erfindung eine bevorzugte Ausführung, ist das Faserverbundhalbzeug 12 ein faserverstärktes (z. B. kohlenstofffaserverstärktes) Thermoplasthalbzeug, also ein thermoplastischer Werkstoff (z. B. PEI, PPS oder PEEK) mit darin eingebetteten Verstärkungsfasern. Bei dem Fasermaterial (z. B. Kohlenstofffasermaterial) kann es sich insbesondere um ein Gewebe, Gelege oder Geflecht aus Fasern bzw. bevorzugt Faserbündeln ("Rovings") handeln, oder bevorzugt um ein mehrschichtiges Laminat aus mehreren Schichten derartiger textiler Flächengebilde.

Die (in den Fig. 1 und 2 nicht dargestellten) distalen Enden der Haltestreifen 14 können z. B. an einem Halterahmen fixiert bzw. befestigt sein, so dass das Faserverbundhalbzeug 12 über die Halteelemente 14 innerhalb des Rahmens gehalten bzw. "aufgespannt" wird. Bei der Verarbeitung eines Thermoplasthalbzeuges kann dieses Faserverbundhalbzeug (oftmals als "Platine" bezeichnet) in derart gehaltenem Zustand erwärmt und in das betreffende Formwerkzeug eingelegt und schließlich umgeformt werden.

Fig. 2 zeigt die Halbzeuganordnung 10 nach abgeschlossener Umformung des Faserverbundhalbzeuges 12.

Das eigentliche herzustellende Faserverbundbauteil 13 ist in Fig. 2 gestrichelt eingezeichnet und wird aus dem umgeformten Faserverbundhalbzeug 12 (Fig. 2) nachträglich z. B. herausgefräst.

Das in Fig. 2 beispielhaft eingezeichnete Faserverbundbauteil 13 ist wesentlich kleiner als das zur Umformung verwendete Formwerkzeug (vgl. in Fig. 1 dargestelltes Unterwerkzeug 2). Das somit "relativ groß" dimensionierte Formwerkzeug hat den Vorteil, dass mit demselben Werkzeug verschieden große Bauteile gefertigt werden können (bis hin zur Größe des Formwerkzeuges). Ein weiterer Vorteil besteht darin, dass mit demselben Werkzeug durch eine Variation der Positionierung des Faserverbundhalbzeuges verschieden formgestaltete Bauteile gefertigt werden können.

Wie aus Fig. 1 ersichtlich, könnte dementsprechend die verwendete Halbzeuganordnung 10 bzw. das Faserverbundhalbzeug 12 auch kleiner oder größer dimensioniert und/oder "an anderer Stelle umgeformt" sein, um dementsprechend mit demselben Werkzeug ein kleineres oder größeres, bzw. anders formgestaltetes Bauteil herzustellen.

Ein gegenüber dem Stand der Technik gravierender Vorteil der in Fig. 1 veranschaulichten Halbzeuganordnung 10 bzw. des damit durchgeführten Herstellungsprozesses besteht darin, dass die Größe des Faserverbundhalbzeuges 12 allenfalls geringfügig größer als die Größe des eigentlich herzustellenden Faserverbundbauteils 13 sein muss, da die Halbzeuganordnung 10 derart ausgestaltet ist, dass es vorteilhaft ermöglicht wird, dass während des Umformens der in Fig. 1 mit 16 bezeichnete Rand des Faserverbundhalbzeuges 12 wenigstens teilweise, insbesondere wie dargestellt vollständig innerhalb des Formwerkzeuges (zwischen Unter- und Oberwerkzeug) verläuft und die Haltestreifen 14 sich jeweils aus dem Formwerkzeug (seitlich) heraus erstrecken.

Die hierfür vorgesehene Besonderheit der Halbzeuganordnung 10 besteht darin, dass die Haltestreifen 14-1 bis 14-4 zur Vermeidung eines höhenmäßigen Überstandes in jeweiligen Aussparungen 18-1 bis 18-4 versenkt angeordnet sind.

Durch diese Maßnahme kann vorteilhaft eine Werkzeugschädigung während des Umformprozesses vermieden werden, da gewissermaßen die Höhe (Dicke) der Haltestreifen 14-1 bis 14-4 teilweise oder ganz "zum Verschwinden gebracht" wird, je nach Tiefe der Aussparungen 18-1 bis 18-4 im Vergleich zur Höhe (Dicke) der Haltestreifen 14-1 bis 14-4.

Im dargestellten Ausführungsbeispiel gemäß Fig. 1 ist beispielsweise vorgesehen, dass die freiliegenden Oberflächen der versenkt angeordneten Haltestreifen 14-1 bis 14-4 jeweils bündig zur Oberfläche des Faserverbundhalbzeuges im an die Aussparungen 18-1 bis 18-4 angrenzenden Bereich sind.

Dieses "Versenken" wird nur im von den Haltestreifen 14-1 bis 14-4 besetzten Be-. reich des Faserverbundhalbzeuges 12 benötigt. Hierbei ist vorgesehen, dass die Aussparungen 18-1 und 18-4 jeweils eine Kontur besitzen, die an die Kontur des betreffenden Haltestreifens (allgemein: Halteelementes) in diesem Bereich angepasst ist.

Im dargestellten Ausführungsbeispiel ist die Kontur der Haltestreifen 14 jeweils im Wesentlichen langgestreckt rechteckig, wobei jedoch das proximale Ende (welches am Faserverbundhalbzeug 12 durch eine Vernietung befestigt ist) etwas verbreitert und mit runder Kontur ausgestaltet ist. Die Befestigung ist im dargestellten Beispiel mit Senknieten 20-1 bis 20-4 realisiert.

Die Kontur der jeweiligen Aussparungen 18-1 bis 18-4 folgt der vorerwähnten Kontur der Haltestreifen 14-1 bis 14-4, so dass die Haltestreifen 14 jeweils "mit geringem Spiel" in den Aussparungen 18 angeordnet sind.

Vergleicht man in Fig. 2 die Kontur des herzustellenden Faserverbundbauteils 13 mit der Kontur des "Vorproduktes" (Faserverbundhalbzeug 12), so fällt eine weitere, im Rahmen der Erfindung vorteilhaft realisierbare Besonderheit auf, die darin besteht, dass die Kontur des Faserverbundhalbzeuges 12 im Wesentlichen (mit vergleichsweise geringem, bevorzugt einheitlichem Überstand) der Kontur des herzustellenden Bauteils 13 folgt, wobei erhebliche Ausbuchtungen (Überstände) des Faserverbundhalbzeuges 12 lediglich an denjenigen Stellen im Bereich des Randes 16 vorgesehen sind, an denen die Haltestreifen 14 jeweils in den Bereich des Faserverbundhalbzeuges 12 hineinragen und am Faserverbundhalbzeug 12 fixiert bzw. befestigt sind.

Diese Maßnahme minimiert vorteilhaft weiter den Materialbedarf und ist unabhängig von der konkreten Formgestaltung bzw. Kontur des herzustellenden Faserverbundbauteils einsetzbar.

Nochmals zurückkommend auf die "versenkte Anordnung" der Haltestreifen (14) bzw. allgemein Halteelemente im Bereich des Faserverbundhalbzeuges (12) einige allgemeingültige Überlegungen:

Die Höhe (Dicke) des Faserverbundhalbzeuges im Bereich der Aussparungen (18), bzw. bei einheitlicher Dicke in allen Bereichen des Faserverbundhalbzeuges, sei mit "D" bezeichnet.

Die angenommen einheitliche Höhe (Dicke) der Halteelemente bzw. Haltestreifen im proximalen Bereich (während des Umformprozesses innerhalb des Formwerkzeuges liegend) sei mit "d" bezeichnet.

In einer bevorzugten Ausführungsform ist vorgesehen, dass die Aussparungen das Material des Faserverbundhalbzeuges jeweils in Höhenrichtung betrachtet nicht vollständig durchsetzen, sondern als Aussparung lediglich auf einer Flacheite vorgesehen sind. Wird hierbei die Aussparungstiefe mit "a" und die Höhe (Dicke) des verbleibenden Halbzeugmaterials mit "b" bezeichnet, so gilt D = a + b.

Es können vorteilhaft eine oder mehrere der folgenden Dimensionierungsregeln (für die noch nicht umgeformte Halbzeuganordnung) vorgesehen sein:

$$a > 0{,}05\ D,\ \text{insbesondere}\ a > 0{,}1\ D \qquad \text{(Regel 1)}$$

$$a < 0{,}5\ D,\ \text{insbesondere}\ a < 0{,}4\ D \qquad \text{(Regel 2)}$$

$$a > 0{,}8\ d,\ \text{bevorzugt}\ a > 1{,}0\ d \qquad \text{(Regel 3)}$$

$$a < 3\ d,\ \text{bevorzugt}\ a < 2\ d \qquad \text{(Regel 4)}$$

Mit der Bemessungsregel "a > d" kann vorteilhaft den Fällen Rechnung getragen werden, bei denen der Umformprozess eine nennenswerte höhenmäßige Stauchung des Faserverbundhalbzeuges involviert.

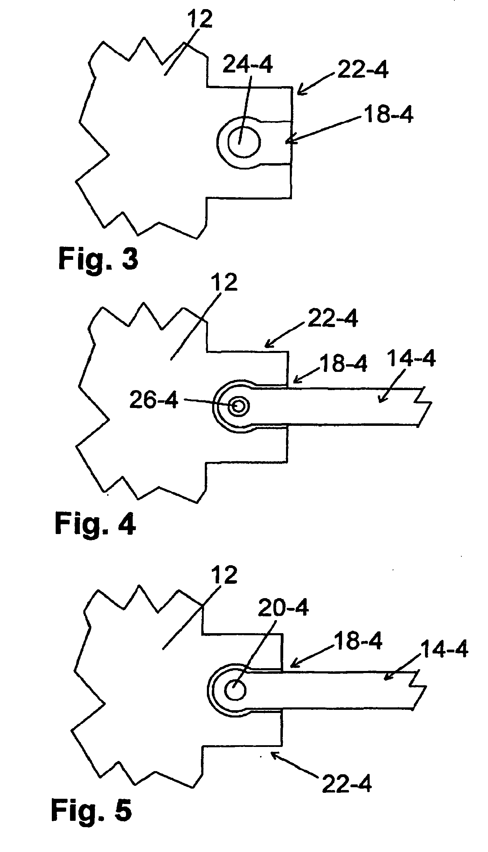

Die Fig. 3 bis 5 veranschaulichen die Art und Weise der Befestigung (Vernietung) der Haltestreifen 14 bei der bereits mit Bezug auf die Fig. 1 und 2 beschriebenen Halbzeuganordnung 10, am Beispiel der Befestigung des Haltestreifens 14-4 (vgl. in Fig. 1 mit III gekennzeichneter Bereich).

In einem ersten Schritt wird an dem bereits in gewünschter Weise konfektionierten Faserverbundhalbzeug 12 die Aussparung 18-4 eingearbeitet (z. B. eingefräst), wie in Fig. 3 dargestellt.

Die Aussparung 18-4 besitzt im dargestellten Beispiel eine einheitliche Aussparungstiefe (oben mit "a" bezeichnet), wobei an der späteren Vernietungsstelle jedoch ein vollständig durch das Faserverbundhalbzeug 12 durchgehendes Befestigungsloch 24-4 ausgebildet ist.

In einem zweiten Schritt wird das proximale Ende des Haltestreifens 14-4 in die Aussparung 18-4 eingelegt, wie in Fig. 4 dargestellt.

In der Draufsicht von Fig. 4 betrachtet verbleibt lediglich ein kleiner Spalt zwischen einerseits der Kontur der Aussparung 18-4 und andererseits der Kontur des Haltestreifens 14-4 im Bereich dieser Aussparung 18-4.

Dabei kommt ein an der späteren Vernietungsstelle befindliches Senkloch 26-4 des Haltestreifens 14-4 in Deckung mit dem Befestigungsloch 24-4 des Faserverbundhalbzeuges 12.

In einem dritten Schritt wird schließlich die Senkniete 20-4, durch die Löcher 24-4 und 26-4 durchgehend, eingesetzt und entsprechend verformt, um das proximale Ende des Haltestreifens 14-4 am Faserverbundmaterial 12 zu befestigen, wie in Fig. 5 dargestellt.

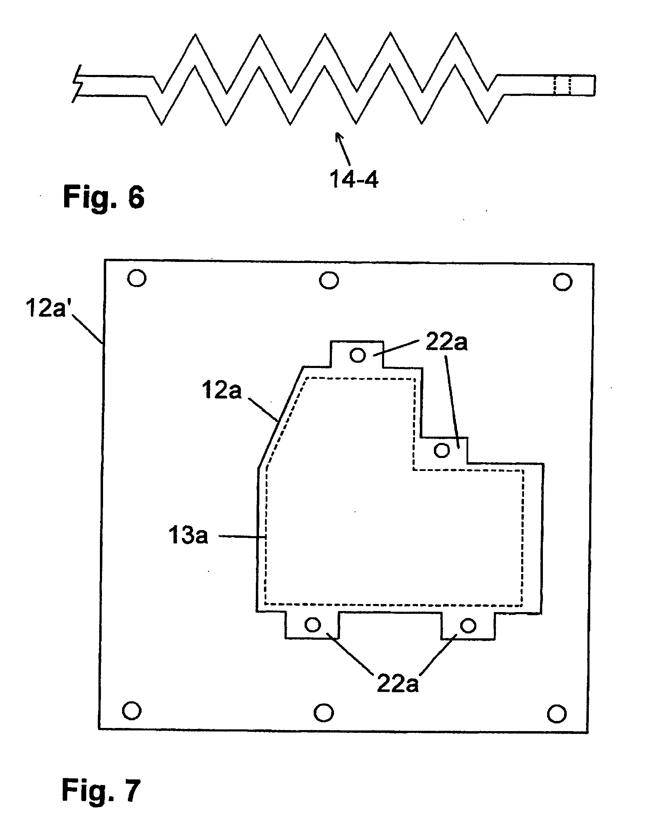

Fig. 6 veranschaulicht eine Möglichkeit zur Realisierung einer Zugfederwirkung von im Rahmen der Erfindung eingesetzten Halteelementen, und zeigt einen distalen Bereich (der in den Fig. 1 und 2 nicht mehr dargestellt ist) des Haltestreifens 14-4.

In diesem Bereich besitzt der Haltestreifen 14-4 eine zickzackartige Formgestaltung, welche die gewünschte Federwirkung bereitstellt.

Fig. 7 ist eine Darstellung zur Veranschaulichung des Ausmaßes der mit der vorliegenden Erfindung erzielbaren Materialeinsparung.

In Fig. 7 ist, lediglich beispielhaft, eine Formgestaltung eines Faserverbundhalbzeuges 12a und die darin einbeschriebene Form desjenigen Bereiches 13a dargestellt, der letztlich für das herzustellende Faserverbundbauteil benötigt wird.

Erfindungsgemäß ist es möglich, das Faserverbundhalbzeug 12a mehr oder weniger "maßzuschneidern", also der tatsächlich benötigten Form des herzustellenden Faserverbundbauteils (vgl. Materialbereich 13a) anzupassen, auch wenn dadurch das Faserverbundhalbzeug 12a wesentlich kleiner als das zum Umformen verwendete Formwerkzeug ausfällt.

Im Stand der Technik wurde zur Herstellung desselben Faserverbundbauteils (vgl. Materialbereich 13a), mittels desselben, an sich "zu groß" dimensionierten Formwerkzeuges, ein wesentlich größerer Zuschnitt 12a' von Faserverbundmaterial benötigt, damit der Rand des Zuschnittes 12a' ringsherum über den Rand des Formwerkzeuges übersteht.

**Patentansprüche**

1. Halbzeuganordnung für die Herstellung eines Faserverbundbauteils (13) durch Umformen eines flächigen Faserverbundhalbzeuges (12) in einem Formwerkzeug, umfassend das Faserverbundhalbzeug (12) und mehrere daran fixierte und sich jeweils über den Rand des Faserverbundhalbzeuges hinaus erstreckende Halteelemente (14), **dadurch gekennzeichnet, dass** die Halteelemente (14) zur Vermeidung eines höhenmäßigen Überstandes in Aussparungen (18) des Faserverbundhalbzeuges (12) versenkt angeordnet sind.

2. Halbzeuganordnung nach Anspruch 1, wobei die Aussparungen (18) jeweils eine Kontur besitzen, die an die Kontur des betreffenden Halteelementes (14) angepasst ist.

3. Halbzeuganordnung nach einem der vorangehenden Ansprüche, wobei freiliegende Oberflächen der versenkt angeordneten Halteelemente (14) jeweils versenkt oder allenfalls im Wesentlichen bündig zur Oberfläche des Faserverbundhalbzeuges (12) im an die Aussparung (18) angrenzenden Bereich angeordnet sind.

4. Halbzeuganordnung nach einem der vorangehenden Ansprüche, wobei die Halteelemente (14) jeweils als langgestreckte und koplanar zur Ebene des Faserverbundhalbzeuges angeordnete Haltestreifen ausgebildet sind.

5. Halbzeuganordnung nach einem der vorangehenden Ansprüche, wobei die Halteelemente (14) wenigstens abschnittweise, insbesondere insgesamt aus einem Metallmaterial gebildet sind.

6. Halbzeuganordnung nach einem der vorangehenden Ansprüche, wobei die Halteelemente (14) wenigstens abschnittweise, insbesondere insgesamt aus einem Kunststoffmaterial, beispielsweise einem faserverstärkten Kunststoffmaterial gebildet sind.

7. Halbzeuganordnung nach einem der vorangehenden Ansprüche, wobei die Halteelemente (14) jeweils eine zur Realisierung einer Zugfederwirkung geeignete Formgestaltung besitzen.

8. Halbzeuganordnung nach einem der vorangehenden Ansprüche, wobei die Halteelemente jeweils durch eine Vernietung (20) an dem Faserverbundhalbzeug (12) fixiert sind.

9. Verfahren zur Herstellung eines Faserverbundbauteils (13) durch Umformen eines flächigen Faserverbundhalbzeuges (12) in einem Formwerkzeug, unter Verwendung einer Halbzeuganordnung (12, 14, 20) nach dem Anspruch 1, insbesondere nach einem der Ansprüche 1 bis 8, **dadurch gekennzeichnet, dass** während des Umformens der Rand (16) des Faserverbundhalbzeuges (12) wenigstens teilweise, insbesondere vollständig innerhalb des Formwerkzeuges verläuft und die Halteelemente (14) sich jeweils aus dem Formwerkzeug heraus erstrecken.

10. Verwendung einer Halbzeuganordnung (12, 14, 20) nach einem der Ansprüche 1 bis 8 und/oder eines Verfahrens nach Anspruch 9 zur Herstellung von Clips für die Herstellung eines Fahrzeugrumpfes aus Rumpfschale, Stringern, Spanten und Clips.

**Claims**

1. Semi-finished product assembly for manufacturing a fibre-composite component (13) by forming a planar semi-finished fibre-composite product (12) in a moulding tool, comprising the semi-finished fibre-composite product (12) and a plurality of retaining elements (14) which are fixed to said semi-finished fibre-composite product and which each extend beyond the periphery thereof, **characterized in that** the retaining elements (14) for avoiding a height-related projection are disposed so as to be countersunk in recesses (18) of the semi-finished fibre-composite product (12).

**2.** Semi-finished product assembly according to Claim 1, wherein the recesses (18) each have a contour which is adapted to the contour of the respective retaining element (14).

**3.** Semi-finished product assembly according to one of the preceding claims, wherein exposed surfaces of the countersunk retaining elements (14) each are disposed so to be countersunk or at best so as to be substantially flush with the surface of the semi-finished fibre-composite product (12) in the region that is contiguous to the recess (18).

**4.** Semi-finished product assembly according to one of the preceding claims, wherein the retaining elements (14) each are configured as elongate retaining strips which are coplanar with the plane of the semi-finished fibre-composite product.

**5.** Semi-finished product assembly according to one of the preceding claims, wherein the retaining elements (14) at least in portions, in particularly entirely, are formed from a metallic material.

**6.** Semi-finished product assembly according to one of the preceding claims, wherein the retaining elements (14) at least in portions, in particular entirely, are formed from a plastics material, for example from a fibre-reinforced plastics material.

**7.** Semi-finished product assembly according to one of the preceding claims, wherein the retaining elements (14) each have a designed shape which is suitable for implementing the effect of a tension spring.

**8.** Semi-finished product assembly according to one of the preceding claims, wherein the retaining elements each are secured to the semi-finished fibre-composite product (12) by riveted connection (20).

**9.** Method for manufacturing a fibre-composite component (13) by forming a planar semi-finished fibre-composite product (12) in a moulding tool, using a semi-finished product assembly (12, 14, 20) according to Claim 1, in particular according to one of Claims 1 to 8,
**characterized in that**
the periphery (16) of the semi-finished fibre-composite product (12) during forming at least in part, in particular entirely, runs within the moulding tool, and the retaining elements (14) each extend out from the moulding tool.

**10.** Use of a semi-finished product assembly (12, 14, 20) according to one of Claims 1 to 8 and/or to a method according to Claim 9, for manufacturing clips for the manufacture of a vehicle fuselage of a fuselage shell, stringers, formers, and clips.

**Revendications**

**1.** Arrangement de fabrication de semi-produits pour la fabrication d'un composant composite renforcé par des fibres (13), par formage d'un semi-produit bidimensionnel composite renforcé par des fibres (12) dans un outil de formage, comprenant le semi-produit composite renforcé par des fibres (12) et plusieurs éléments de retenue (14), fixés contre cet outil, dont chacun s'étend au-delà du bord du semi-produit de composite renforcé par des fibres, **caractérisé en ce que** les éléments de retenue (14) sont, pour éviter un porte-à-faux en hauteur, disposés noyés dans des évidements (18) du semi-produit composite renforcé par des fibres (12).

**2.** Arrangement de fabrication de semi-produits selon la revendication 1, dans lequel chacun des évidements (18) comprend un contour, qui est adapté au contour de l'élément de retenue considéré (14).

**3.** Arrangement de fabrication de semi-produits selon l'une des revendications précédentes, dans lesquelles les surfaces libres des éléments de retenue (14) disposés noyés sont chacune disposées noyées, ou si nécessaire pour l'essentiel en affleurement avec la surface du semi-produit composite renforcé par des fibres (12), dans la zone contiguë à l'évidement (18).

**4.** Arrangement de fabrication de semi-produits selon l'une des revendications précédentes, dans lequel chacun des éléments de retenue (14) est conçu comme une bande de retenue, allongée, disposée coplanaire avec le plan du semi-produit composite renforcé par des fibres.

**5.** Arrangement de fabrication de semi-produits selon l'une des revendications précédentes, dans lequel les éléments de retenue (14) sont au moins par segments, en particulier en totalité, formés d'un matériau métallique.

6. Arrangement de fabrication de semi-produits selon l'une des revendications précédentes, dans lequel les éléments de retenue (14) sont au moins par segments, en particulier en totalité, formés d'un matériau plastique, par exemple d'un matériau plastique renforcé par des fibres.

7. Arrangement de fabrication de semi-produits selon l'une des revendications précédentes, dans lequel les éléments de retenue (14) présentent chacun une forme convenant à la réalisation de l'effet de ressort de traction.

8. Arrangement de fabrication de semi-produits selon l'une des revendications précédentes, dans lequel chacun des éléments de retenue est fixé par un clivetage (20) au semi-produit composite renforcé par des fibres (12).

9. Procédé de fabrication d'un composant composite renforcé par des fibres (13), par formage d'un semi-produit bidimensionnel composite renforcé par des fibres (12) dans un outil de formage, par utilisation d'un arrangement de fabrication de semi-produits (12, 14, 20) selon la revendication 1, en particulier selon l'une des revendications 1 à 8 ;
**caractérisé en ce que**, pendant le formage, le bord (16) du semi-produit composite renforcé par des fibres (12) court au moins partiellement, en particulier en totalité, à l'intérieur de l'outil de formage, et les éléments de retenue (14) s'étendent chacun au-delà de l'outil de formage.

10. Utilisation d'un arrangement de fabrication de semi-produits (12, 14, 20) selon l'une des revendications 1 à 8, et/ou d'un procédé selon la revendication 9, pour fabriquer des agrafes destinées .à la fabrication d'une carrosserie de véhicules, constituée d'une coque, de raidisseurs, de cloisons et d'agrafes.

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009130120 A